Europäisches Patentamt

European Patent Office

Office européen des brevets

(11) Publication number: **0 286 751 B1**

(12) **EUROPEAN PATENT SPECIFICATION**

(45) Date of publication of patent specification: **26.08.92**

(51) Int. Cl.⁵: **G11B 15/675**, G11B 23/04, G11B 23/087

(21) Application number: **87303417.7**

(22) Date of filing: **16.04.87**

(54) **Cassette tape recording and/or reproducing apparatus and cassettes for use therein.**

(43) Date of publication of application:
**19.10.88 Bulletin 88/42**

(45) Publication of the grant of the patent:
**26.08.92 Bulletin 92/35**

(84) Designated Contracting States:
**AT DE FR GB NL**

(56) References cited:
**GB-A- 2 143 209**
**US-A- 4 268 877**
**US-A- 4 283 022**

**PATENT ABSTRACTS OF JAPAN, vol. 7, no. 224 (P-227)[1369], 5th October 1983; & JP - A - 58 114 367 (MATSUSHITA DENKI SANGYO K.K.) 07-07-1983**

(73) Proprietor: **SONY CORPORATION**
**7-35 Kitashinagawa 6-chome Shinagawa-ku Tokyo 141(JP)**

(72) Inventor: **Ohtani, Yuzo c/o Patents Division Sony Corporation 6-7-35 Kitashinagawa Shinagawa-ku Tokyo 141(JP)**
Inventor: **Ueda, Sachio c/o Patents Division Sony Corporation 6-7-35 Kitashinagawa Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to cassette tape recording and/or reproducing apparatus and cassettes for use therein.

In a known cassette tape recording and/or reproducing apparatus capable of selectively employing tape cassettes of different sizes, for example, as disclosed in our US patent specification US-A-3735939, a cassette holder movable between a raised cassette receiving and discharging position and a lowered cassette loading position is provided with a single, substantially laterally centred guide rail that extends parallel to the direction in which a cassette is slidably inserted into, or removed from the holder with the holder in its raised position. Each cassette, whether of large or small size, is provided with a substantially laterally centred guide groove in its bottom surface for slidably receiving the guide rail of the holder when the cassette is inserted into the holder so as correctly to position the cassette relative to the holder.

It will be apparent that in this arrangement, each of the cassettes of different sizes has to be provided with such a guide groove for suitably positioning it in the cassette holder. However, many cassettes that are currently available commercially and which could be used as the small cassettes do not have such a guide groove, and hence cannot be used in this arrangement. Therefore, to use the currently commercially available cassettes as the small cassettes in this arrangement, they would have to be additionally processed to provide the guide groove, which would be both costly and difficult.

US patent specification US-A-4 268 877 discloses a recording and/or playback machine and a magazine therefor with features similar to those of the pre-characterizing parts of claims 1 and 6.

According to the present invention there is provided a cassette tape recording and/or reproducing apparatus capable of selective operation with at least a relatively large cassette and a relatively small cassette having different respective widths each measured in a transverse direction, said large cassette having a surface with a plurality of grooves therein spaced apart in the respective transverse direction and each extending at right angles to said transverse direction;

the apparatus comprising:

a cassette holder movable between a cassette receiving and discharging position and a cassette loading position;

a pair of parallel guide rails on said cassette holder, said guide rails being spaced apart laterally for slidable reception in the grooves of said large cassette so as to position it with respect to said holder in said loading position, and so as to guide said large cassette in and out of said holder in said receiving and discharging position; and

confronting surfaces on two of said guide rails which are spaced apart by the width of said small cassette so that said confronting surfaces are slidably engageable with opposed side surfaces of said small cassette for positioning it with respect to said holder in said loading position and for guiding said small cassette in and out of said holder in said receiving and discharging position;

characterized in that:

said guide rails are disposed on a surface of said cassette holder on which in use a surface of said cassette rests; and the apparatus is constructed so as to receive either said cassette,

each of which has a lid which opens in the direction away from said surface of said cassette holder.

According to the present invention there is also provided a relatively large-sized tape cassette having a width measured in a transverse direction larger than the similarly measured width of a standard, relatively small-sized tape cassette, said large cassette being selectively loadable, in place of said small cassette, into a tape cassette recording and/or reproducing apparatus;

characterized in that:

said large cassette comprising a bottom surface with a plurality of grooves therein spaced apart in the respective transverse direction and each extending at right angles to said transverse direction, said grooves having a distance therebetween equal to said width of said small cassette, and a lid which opens in the direction away from said bottom surface.

The invention will now be described by way of example with reference to the accompanying drawings, throughout which like parts are referred to by like references, and in which:

Figure 1 is a perspective view, partly broken away and in section, of a cassette holder included in an embodiment of tape cassette recording and/or reproducing apparatus according to the invention;

Figure 2 is a front elevational view of the cassette holder shown in its raised cassette receiving and discharging position and with a large cassette positioned therein;

Figure 3 is a front elevational view similar to that of Figure 2, but showing a small cassette positioned in the cassette holder;

Figure 4 is a sectional view taken along the line IV-IV in Figure 2, but showing the cassette holder containing the large cassette in its loading position; and

Figure 5 is a view similar to that of Figure 4, but showing the small cassette in the cassette holder.

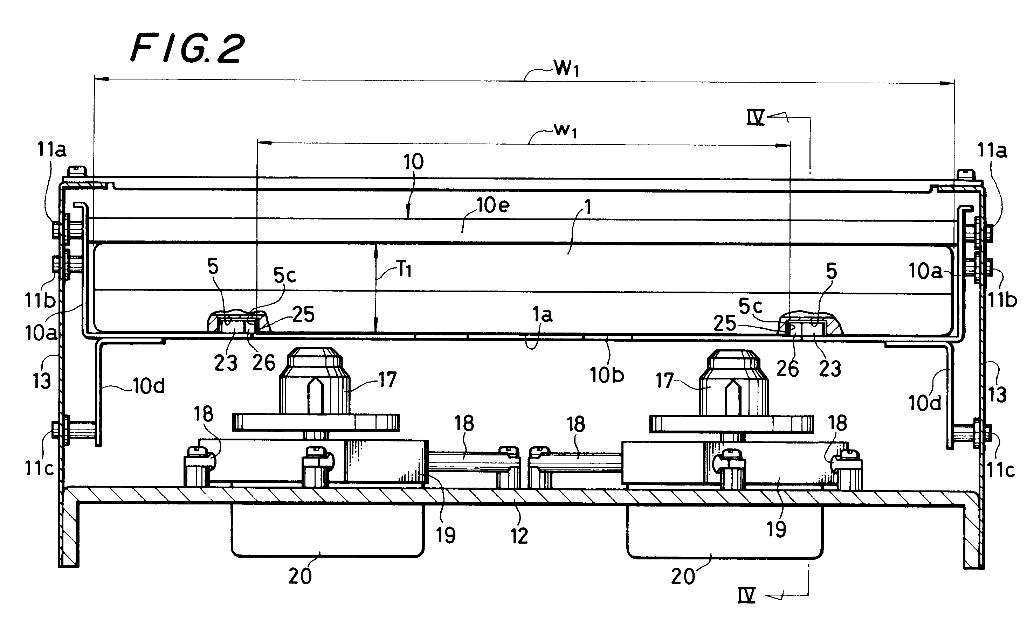

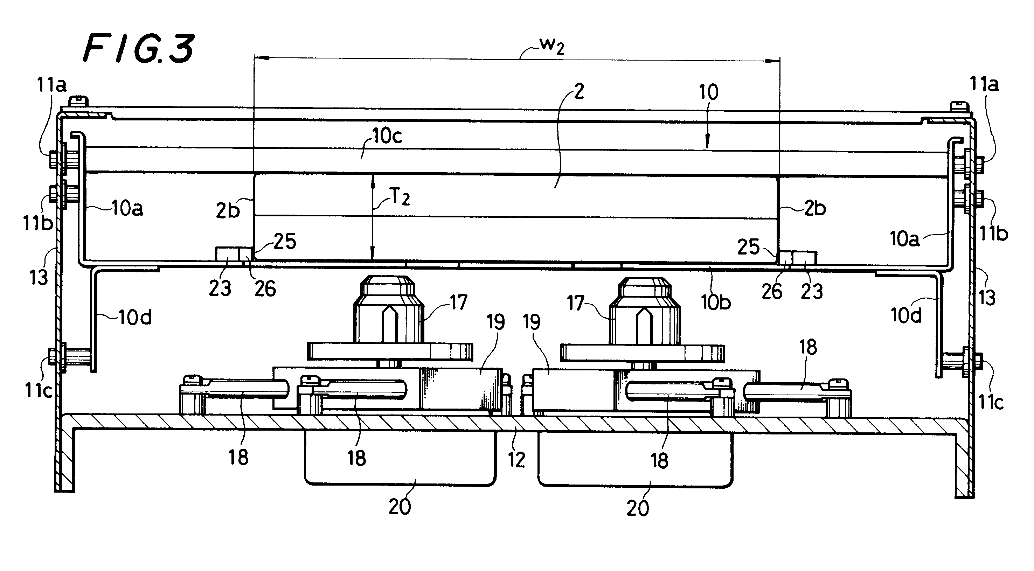

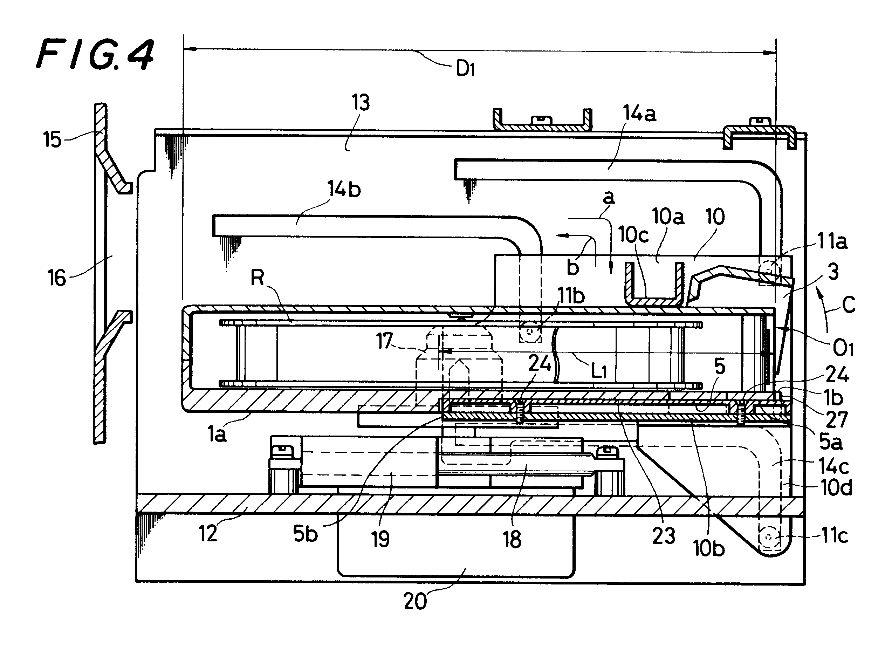

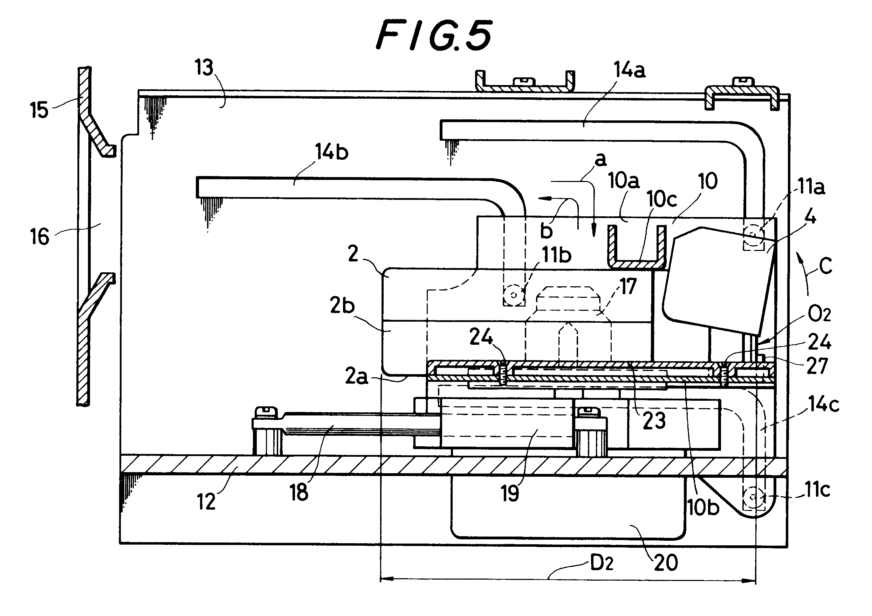

Referring to the drawings in detail, it will be seen that there are provided a large-sized cassette 1 (Figures 2 and 4) and a small-sized cassette 2 (Figures 3 and 5) which may be of a currently commercially available type, for example, of the type employed in Beta-type cassette video tape recorders (VTRs). Each of the cassettes 1 and 2 contains a pair of rotatable reels arranged side-by-side, and one of which is indicated at R in Figure 4. The cassettes 1 and 2 are substantially rectangular and have equal thicknesses T1 and T2 (Figures 2 and 3), while the large cassette 1 has a width W1 measured in the transverse direction (Figure 2) and a depth D1 measured at right angles to the transverse direction (Figure 4) that are substantially larger than the width W2 and depth D2, respectively (Figures 3 and 5) of the small cassette 2. Thus, the reels contained in the large cassette 1 can be spaced further apart and be of substantially larger diameter than those contained in the small cassette 2 so as to permit a substantially larger amount of tape to be wound on the reels in the large cassette 1. The cassettes 1 and 2 have openings 01 and 02, respectively, extending across the back for access to the tape, and the lids 3 and 4 (Figures 4 and 5) are pivotally mounted at the back portions of the cassettes 1 and 2, respectively, for swinging movements in the direction C between closed positions covering the openings 01 and 02, and the illustrated raised, open positions (Figures 4 and 5).

The large cassette 1 is formed, in its bottom surface 1a, with a plurality of grooves 5 (Figures 2 and 4) which are spaced apart in the transverse direction by a distance w1 approximately equal to the width W2 of the small cassette 2. The grooves 5 are parallel to each other and extend at right angles to the transverse direction of the large cassette 1. Further, as shown in Figure 4, each of the grooves 5 has a length L1 substantially smaller than the depth D1 of the large cassette 1 and extends from a back edge 1b at the bottom of the large cassette 1 which, at least in part, defines the opening 01. The grooves 5 are open only at the back ends 5a thereof, that is, only at the ends corresponding to the edge 1b, while the forward ends 5b of the grooves 5 are closed.

As distinguished from the foregoing, the small cassette 2, which as noted above may be a commercially available cassette for use in Beta-type VTRs, is used without modification, and thus does not have any grooves in the bottom surface 2a thereof, as shown in Figure 3.

A front-loading tape cassette recording and/or reproducing apparatus capable of selective operation with either the large cassette 1 or the small cassette 2 includes a cassette holder 10 formed of sheet metal and having side portions 10a directed upwardly from the opposite side edges of a bottom support plate 10b, and a bracing member 10c extending between the side portions 10a adjacent to the back of the holder 10 and spaced upwardly from the support plate 10b. It will be apparent from Figure 2 that the holder 10 is large enough to accommodate the large cassette 1, and hence also the small cassette 2. More particularly, the lateral distance between the side portions 10a of the holder 10 is shown to be larger than the width W1 of the large cassette 1, while the vertical distance between the support plate 10b and the underside of the backing member 10c is at least slightly larger than the thicknesses T1 and T2 of the cassettes 1 and 2, respectively.

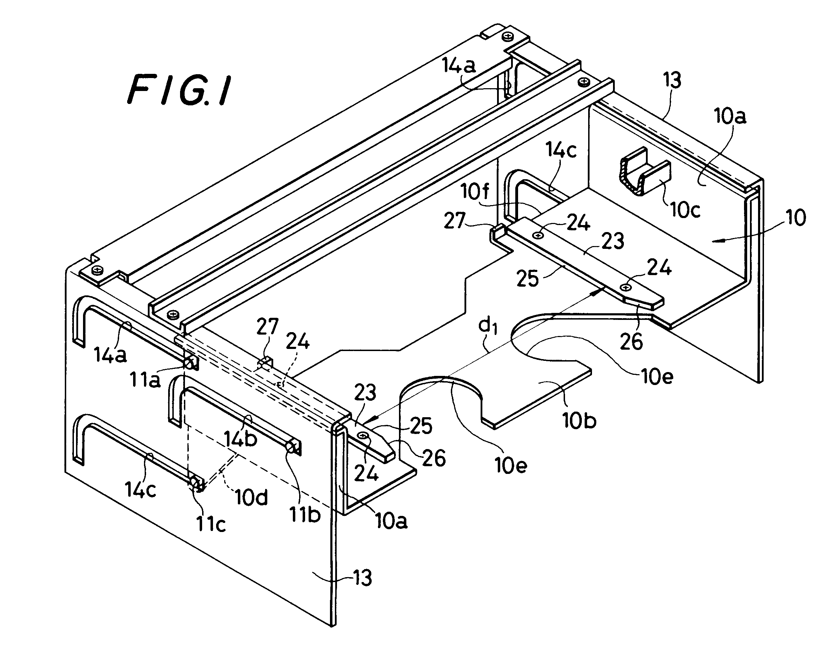

Each of the side portions 10a of the holder 10 has guide rollers 11a and 11b directed outwardly therefrom, and a third guide roller 11c, at each side of the holder 10, directed outwardly from the lower end of a bracket 10d depending from the respective side portion of the support plate 10b. The guide rollers 11a, 11b and 11c are movable along guide slots 14a, 14b and 14c, respectively, formed in vertically directed side plates 13 which are suitably fixed, at their lower portions, to the opposite sides of a chassis 12 (Figures 2 and 3) and which extend upwardly therefrom. The guide slots 14a, 14b and 14c each have a relatively long horizontally extending portion from which, at the back end, a vertical portion depends. Thus, the holder 10 is guided by the guide rollers 11a, 11b and 11c and the guide slots 14a, 14b and 14c for reciprocal movements in the directions a and b in Figures 4 and 5 along a generally inverted L-shaped path between a raised cassette receiving and discharging position (Figures 1, 2 and 3), and a lowered cassette loading or mounting position (Figures 4 and 5). It will be appreciated that the support plate 10b of the holder 10 remains horizontal during its movements between the cassette receiving and discharging position and the cassette loading position. In the cassette receiving and discharging position, the support plate 10b is substantially at the level of the bottom edge of a port 16 provided in a front panel 15 of the apparatus, and the open front of the holder 10 is then disposed immediately behind the port 16 so that a cassette 1 or 2 can be slidably inserted through the port 16 into the holder 10. On the other hand, in the lowered cassette loading or mounting positions, the cassette 1 or 2 in the holder 10 is moved rearwardly and downwardly onto a pair of reel tables 17 which project upwardly through cut-outs 10e (Figure 1) in the support plate 10b and engage in the hubs (not shown) of the supply and take-up reels in the cassette 1 and 2.

As shown in Figures 2 and 3, the reel tables 17 are rotatably mounted on support blocks 19 which are reciprocable along respective horizontally disposed guide rails mounted on the chassis 12. Further, each support block 19 carries a motor 20 for rotatably driving the respective reel table 17. A holder driving mechanism (not shown) may be provided selectively to drive the holder 10 between its raised, cassette receiving and discharging position and its cassette loading or mounting position. A mechanism (not shown) may be provided for responding to the size of the cassette 1 or 2 inserted into the holder 10 when it is in its cassette receiving and discharging position, and for suitably positioning the reel tables 17 for engagement with the reels. Thus, for example, when a large cassette 1 is inserted into the holder 10, as shown in Figure 2, the distance between the reel tables 17 is increased to correspond to the distance between the axes of the reels in the large cassette 1. On the other hand, when a small cassette 2 is inserted, as shown in Figure 3, the distance between the axes of the reel tables 17 is decreased to correspond to the relatively small distance between the axes of the reels in the small cassette 2. It is also to be noted that, when a large cassette 1 is inserted in the holder 10, the reel tables 17 are in relatively forward positions so as to be adjacent to the forward edge of the support plate 10b with the holder 10 in its cassette loading position (Figure 4), whereas, the reel tables 17 are rearwardly displaced from the forward edge of the support plate 10b in the loading position of the holder 10 when it contains a small cassette 2 (Figure 5).

A pair of parallel, laterally spaced-apart guide rails 23 are secured on the upper surface of the support plate 10b of the holder 10, as by screws 24. The rails 23 are preferably formed of moulded synthetic resin. The rails 23 extend parallel to the direction of movement of the holder 10, are symmetrically disposed with respect to the middle of the holder 10, and are laterally spaced relative to each other, so that the lateral distance $d_1$ (Figure 1) between the confronting surfaces 25 of the rails 23 is substantially equal to the distance $w_1$ between the grooves 5 in the bottom surface of the large cassette 1 and also substantially equal to the width $W_2$ of the small cassette 2. As shown particularly in Figure 1, the forward end portions of the confronting surfaces 25 on the rails 23 diverge from each other, as at 26, for facilitating the entry of a cassette 1 or 2 into the holder 10.

As shown in Figure 2, when a large cassette 1 is inserted in the holder 10, the grooves 5 in the bottom surface 1a of the cassette 1 slidably receive the rails 23, and surfaces 5c at the laterally inner sides of the grooves 5 slidably engage the confronting surfaces 25 of the rails 23 for thereby accurately positioning the large cassette 1 in the lateral direction relative to the holder 10. Since the grooves 5 in the bottom surface 1a of the large cassette 1 only open at the back edge 1b of the bottom of the large cassette 1, that is, the grooves 5 only open at the ends thereof adjacent to the opening O1 of the large cassette 1, it will be apparent that the large cassette 1 can be inserted in the holder 10 only with the opening O1 and the lid 3 directed towards the back, that is, with the opening O1 in leading relation when the large cassette 1 is inserted into the holder 10. If the large cassette 1 is inserted into the port 16 with the lid 3 at the foremost or trailing part of the large cassette 1, the rails 23 will prevent the insertion of the erroneously oriented large cassette 1 into the holder 10.

When a small cassette 2 is inserted in the horizontal directed through the port 16 into the holder 10 in its raised cassette receiving and discharging position, the opposite side surfaces 2b of the small cassette 2 are guided by the rearwardly converging end portions 26 of the confronting surfaces 25 so as to engage between the confronting surfaces 25 of the rails 23 and thereby be accurately positioned in the lateral direction relative to the holder 10.

As is shown particularly in Figure 1, the support plate 10b of the holder 10 has stop elements, for example, in the form of tabs 27, directed upwardly between the rails 23 from the back edge 10f of the support plate 10b. Thus, when a large cassette 1 is inserted into the holder 10, the bottom edge 1b of the large cassette 1 which defines, at least in part, the opening O1, and which is in leading relation during insertion of the large cassette 1 into the holder 10, engages the tabs 27 for precisely locating the lid 3 and the opening O1 relative to the holder 10 in the forward and rearward direction. Similarly, when a small cassette 2 is inserted into the holder 10, the edge of the bottom surface of the small cassette 2 which is in leading relation and which defines, at least in part, the opening O2 is engageable against the tabs 27 for precisely locating the opening O2 and the lid 4 relative to the holder 10. Accordingly, when the holder 10 is moved to its lowered cassette loading or mounting position with either a large cassette 1 or a small cassette 2 in the holder 10, the lid 3 or 4 and the opening O1 or O2 is precisely located relative to the holder 10 for ensuring that a normal lid opening device (not shown) will properly engage the lid 3 or 4 for opening it in the direction C in Figures 4 and 5. The accurate positioning of the cassette 1 or 2 relative to the holder 10 further ensures that the size of the cassette 1 or 2 will be reliably sensed for causing the proper adjustment of the positions of the reel tables 17 for engagement with the reels in the cassette 1 or 2, as previously described.

In the above described embodiment of the invention, the confronting, laterally inwardly directed surfaces 25 of the rails 23 serve laterally to position the small cassette 2 by engagement with the side surfaces 2b, and also laterally to position the large cassette 1 by engagement with the surfaces 5c at the inner sides of the grooves 5. However, if desired, the grooves 5 can be laterally located or dimensioned in the bottom surface of the large cassette 1 so that the outwardly facing sides of the rails 23 are slidably engageable with the side surfaces of the grooves 5 at the outer sides of the latter for laterally locating the large cassette 1 in the holder 10. In such case, the inner or confronting surfaces 25 of the rails 23 would still serve to locate a small cassette 2 by engagement with the opposite side surfaces thereof.

Although the invention has been described as having particular application to the holder of a cassette VTR, it will be appreciated that the invention can be similarly applied to various cassette mounting devices in other cassette recording and/or reproducing apparatus, such as data processing apparatus.

## Claims

1. A cassette tape recording and/or reproducing apparatus capable of selective operation with at least a relatively large cassette (1) and a relatively small cassette (2) having different respective widths each measured in a transverse direction, said large cassette (1) having a surface (1a) with a plurality of grooves (5) therein spaced apart in the respective transverse direction and each extending at right angles to said transverse direction;
the apparatus comprising:
a cassette holder (10) movable between a cassette receiving and discharging position and a cassette loading position;
a pair of parallel guide rails (23) on said cassette holder (W), said guide rails (23) being spaced apart laterally for slidable reception in the grooves (5) of said large cassette (1) so as to position it with respect to said holder (10) in said loading position, and so as to guide said large cassette (1) in and out of said holder (10) in said receiving and discharging position; and confronting surfaces (25) on two of said guide rails (23) which are spaced apart by the width of said small cassette (2) so that said confronting surfaces (25) are slidably engageable with opposed side surfaces of said small cassette (2) for positioning it with respect to said holder (10) in said loading position and for guiding said small cassette (2) in and out of said holder (10) in said receiving and discharging position;
characterized in that:
said guide rails (23) are disposed on a surface (10b) of said cassette holder (10) on which in use a surface (1a, 2a) of said cassette (1, 2) rests; and
the apparatus is constructed so as to receive either said cassette (1, 2), each of which has a lid (3, 4) which opens in the direction away from said surface (10b) of said cassette holder.

2. Apparatus according to claim 1 further comprising a panel extending at right angles to said guide rails (23) in front of said holder (10) and having a port (16) through which a large or small cassette (1, 2) can travel parallel to said guide rails (23) when being inserted in, or discharged from said holder (10) in said cassette receiving and discharging position; and wherein said holder (10) includes a substantially horizontal support plate (10a) from which said guide rails (23) project upwardly and which is substantially at the level of the bottom of said port (16) in said cassette receiving and discharging position of said holder (10) so that a large or small cassette (1, 2) travelling through said port (16) is slidable at its respective bottom surface (1a, 1b) over said support plate (10a) while being laterally guided by said guide rails (23).

3. Apparatus according to claim 2 wherein each of said large and small cassettes (1, 2) has an opening (O1, O2) for access to tape within the respective cassette (1, 2) when said lid (3, 4) is open, and said opening (O1, O2) is defined, at least in part, by an edge of said bottom surface (1a, 1b) of the cassette (1, 2) which is to be in leading relation during insertion of the cassette (1, 2) into said holder (10); and wherein said support plate (10a) has stop means (27) directed upwardly between said guide rails (23) from a back edge of said support plate (10a) for engagement by said edge of said large or small cassette (1, 2) inserted into said holder (10) for precisely locating said opening (O1, O2) relative to said holder (10) in said cassette loading position.

4. Apparatus according to claim 3 wherein said stop means (27) includes two upwardly directed tabs (27) extending from said back edge adjacent to said confronting surfaces (25) of said guide rails (23).

5. Apparatus according to claim 3 in which said guide rails (23) have a length substantially smaller than the dimension of said large cassette measured parallel to said grooves (5) and said guide rails (23) extend forwardly from said back edge of said support plate (10a); and wherein said grooves (5) of said large cassette have a length approximately equal to said length of said guide rails (23) and extend from said edge of the bottom surface (1a) to permit insertion of said large cassette (1) into said holder (10) only with said edge of its bottom surface (1a) in said leading relation.

6. A relatively large-sized tape cassette (1) having a width measured in a transverse direction larger than the similarly measured width of a standard, relatively small-sized tape cassette (2), said large cassette (1) being constructed to be selectively loadable, in place of said small cassette (2), into a tape cassette recording and/or reproducing apparatus as defined in claim 1:
characterized in that:
said large cassette (1) comprising a bottom surface (1a) with a plurality of grooves (5) therein spaced apart in the respective transverse direction and each extending at right angles to said transverse direction, said grooves (5) having a distance therebetween equal to said width of said small cassette (2), and a lid (3) which opens in the direction away from said bottom surface (1a).

7. A cassette (1) according to claim 6 further comprising an opening (O1) for access to tape in the cassette (1) when said lid (3) is open, with said opening (O1) being defined, at least in part, by an edge (1b) of said bottom surface (1a) from which said grooves (5) extend, each of said grooves (5) having a length substantially smaller than the dimension of said large cassette (1) measured from said edge (1b) in the direction parallel to said grooves (5).

**Patentansprüche**

1. Ein Kassetten-Bandaufnahme- und/oder -Wiedergabegerät, das geeignet ist für wahlweisen Betrieb mit wenigstens einer relativ großen Kassette (1) und einer relativ kleinen Kassette (2) mit jeweils anderen Breitenabmessungen, die jeweils in einer Querrichtung gemessen sind, wobei die große Kassette (1) eine Fläche (1a) aufweist, in der mehrere Nuten (5) mit gegenseitigem Abstand in der jeweiligen Querrichtung angeordnet sind, deren jede sich unter einem rechten Winkel zur Querrichtung erstreckt;
wobei das Gerät umfaßt:
einen Kassettenhalter (10), der zwischen einer Kassettenein- und -ausgabeposition und einer Kassettenladeposition bewegbar ist;
ein Paar paralleler Führungsschienen (23) am Kassettenhalter (10), welche Führungsschienen (23) in seitlicher Richtung mit gegenseitigem Abstand zwecks Gleitaufnahme in den Nuten (5) der großen Kassette (1) angeordnet sind, um diese relativ zu dem in der Ladeposition befindlichen Halter (10) zu positionieren und um die große Kassette (1) in den in der Ein- und Ausgabeposition befindlichen Halter (10) ein- und aus diesem herauszuführen; und
einander gegenüberstehende Flächen (25) an zwei der Führungsschienen (23), die mit einem der Breite der kleinen Kassette (2) entsprechenden gegenseitigen Abstand angeordnet sind, so daß die einander gegenüberstehenden Flächen (25) in Gleiteingriff bringbar sind mit einander abgewandten Seitenflächen der kleinen Kassette (2) zwecks Positionierung derselben relativ zu dem in der Ladeposition befindlichen Halter (10) und zwecks Führung der kleinen Kassette (2) in den in der Ein- und Ausgabeposition befindlichen Halter (10) hinein und aus diesem heraus;
**dadurch gekennzeichnet,** daß:
die Führungsschienen (23) an einer Fläche (10b) des Kassettenhalters (10) angebracht sind, an der sich eine Fläche (1a, 2a) der Kassette (1, 2) bei Benutzung abstützt;
und das Gerät so konstruiert ist, daß es jede der beiden Kassetten (1, 2) aufnimmt, deren jede einen Deckel (3, 4) aufweist, der in Richtung weg von der Fläche (10b) des Kassettenhalters öffnet.

2. Gerät nach Anspruch 1, welches ferner eine Platte umfaßt, die sich vor dem Halter (10) unter einem rechten Winkel zu den Führungsschienen (23) erstreckt und eine Öffnung (16) aufweist, durch die sich eine große oder kleine Kassette (1, 2) parallel zu den Führungsschienen (23) hindurchbewegen kann, wenn sie in den in der Kassettenein- und -ausgabeposition befindlichen Halter (10) eingesetzt oder von ihm abgegeben wird; und in welchem der Halter (10) eine im wesentlichen horizontale Stützplatte (10a) aufweist, von der die Führungsschienen (23) nach oben vorstehen und die in der Kassettenein- und -ausgabepositition des Halters (10) im wesentlichen auf der Höhe der Unterseite der Öffnung (16) angeordnet ist, so daß eine sich durch die Öffnung (16) hindurchbewegende große oder kleine Kassette (1, 2) mit ihrer jeweiligen Bodenfläche (1a, 1b) über die Stützplatte (10a) gleiten kann, während sie durch die Führungsschienen (23) seitlich geführt ist.

3. Gerät nach Anspruch 2, in welchem die große und kleine Kassette (1, 2) jeweils eine Öffnung (01, 02) aufweisen für den Zugang zum Band innerhalb der jeweiligen Kassette (1, 2), wenn der Deckel (3, 4) geöffnet ist, und die Öffnung (01, 02) zumindest teilweise von einem Rand der Bodenfläche (1a, 1b) der Kassette (1, 2) begrenzt ist, der während des Einsetzens der Kassette (1, 2) in den Halter (10) vorn angeordnet ist; und in welchem die Stützplatte (10a) eine von einem rückwärtigen Rand der Stützplatte (10a) zwischen den Führungsschienen (23) nach oben gerichtete Anschlageinrichtung (27) aufweist für den Eingriff mit dem Rand der in den Halter (10) eingesetzten großen oder kleinen Kassette (1, 2) zwecks präziser Lagebestimmung der Öffnung (01, 02) relativ zum Halter (10) in der Kassettenladeposition.

4. Gerät nach Anspruch 3, in welchem die Anschlageinrichtung (27) zwei nach oben gerichtete Zungen (27) aufweist, die sich in der Nähe der einander gegenüberstehenden Flächen (25) der Führungsschienen (23) vom rückwärtigen Rand aus erstrecken.

5. Gerät nach Anspruch 3, in welchem die Führungsschienen (23) eine Länge aufweisen, die beträchtlich kleiner ist als die Abmessung der großen Kassette, gemessen parallel zu den Nuten (5), und die Führungsschienen (23) sich vom rückwärtigen Rand der Stützplatte (10a) aus nach vorn erstrecken; und in welchem die Nuten (5) der großen Kassette eine Länge aufweisen, die ungefähr gleich der Länge der Führungsschienen (23) ist und sich vom Rand der Bodenfläche (1a) aus erstrecken, um das Einsetzen der großen Kassette (1) in den Halter (10) nur mit vorn angeordnetem Rand ihrer Bodenfläche (1a) zu erlauben.

6. Eine relativ groß dimensionierte Bandkassette (1) mit einer in einer Querrichtung gemessenen Breite, die größer ist als die gleich gemessene Breite einer relativ klein dimensionierten Standard-Bandkassette (2), wobei die große Kassette (1) so ausgebildet ist, daß sie wahlweise anstelle der kleinen Kassette (2) in ein Bandkassetten-Aufnahme-und/oder -Wiedergabegerät nach Anspruch 1 geladen werden kann:
**dadurch gekennzeichnet, daß:**
die große Kassette (1) umfaßt: eine Bodenfläche (1a), in der mehrere Nuten (5) mit gegenseitigem Abstand in der jeweiligen Querrichtung angeordnet sind und deren jede sich unter einem rechten Winkel zur Querrichtung erstreckt, wobei die Nuten (5) einen gegenseitigen Abstand aufweisen, der gleich der Breite der kleinen Kassette (2) ist, und einen Deckel (3), der in Richtung weg von der Bodenfläche (1a) öffnet.

7. Eine Kassette (1) nach Anspruch 6, ferner mit einer Öffnung (01) für den Zugang zum Band in der Kassette (1), wenn der Deckel (3) geöffnet ist, welche Öffnung (01) zumindest teilweise von einem Rand (1b) der Bodenfläche (1a), von dem aus sich die Nuten (5) erstrecken, begrenzt ist, wobei jede der Nuten (5) eine Länge aufweist, die beträchtlich kleiner ist als die Abmessung der großen Kassette (1), gemessen vom Rand (1b) in Richtung parallel zu den Nuten (5).

## Revendications

1. Appareil d'enregistrement et/ou de reproduction à cassette pouvant fonctionner de manière sélective avec au moins une cassette de taille relativement grande (1) et une cassette de taille relativement petite (2) qui ont des largeurs respectives différentes, la largeur étant mesurée suivant une direction transversale, ladite cassette de grande dimension (1) comportant une surface (1a) avec une pluralité de gorges (5) ménagées dedans, ces gorges étant espacées suivant la direction transversale respective et chacune s'étendant à angle droit par rapport à ladite direction transversale ;
l'appareil comprenant :
un support de cassette (10) mobile entre une position de réception et de déchargement de cassette et une position de chargement de cassette ;
une paire de rails de guidage parallèles (23) situés sur ledit support de cassette (10), lesdits rails de guidage (23) étant espacés latéralement pour être reçus par coulissement dans les gorges (5) de ladite cassette de grande dimension (1) de manière à la positionner par rapport audit support (10) selon ladite position de chargement et de manière à guider ladite cassette de grande dimension (1) à l'intérieur et à l'extérieur dudit support (10) selon ladite position de réception et de déchargement ; et
des surfaces se faisant face (25) situées sur les deux dits rails de guidage (23) qui sont espacées par la largeur de ladite cassette de petite dimension (2) de telle sorte que lesdites surfaces qui se font face (25) puissent coulisser le long des surfaces latérales opposées de ladite cassette de petite dimension (2) pour la positionner par rapport audit support (10) selon ladite position de chargement et pour guider ladite cassette (2) à l'intérieur et à l'extérieur dudit support (10) selon ladite position de réception et de déchargement ;

caractérisé en ce que :

lesdits rails de guidage (23) sont disposés sur une surface (10b) dudit support de cassette (10) sur lequel, en fonctionnement, une surface (1a, 2a) de ladite cassette (1, 2) repose ; et

l'appareil est construit de manière à recevoir l'une ou l'autre desdites cassettes (1, 2) dont chacune comporte un couvercle (3, 4) qui s'ouvre suivant une direction d'éloignement par rapport à ladite surface (10b) dudit support de cassette.

2.  Appareil selon la revendication 1, comprenant en outre un panneau s'étendant perpendiculairement auxdits rails de guidage (23) à l'avant dudit support (10) et présentant un orifice (16) au travers duquel une cassette de grande dimension ou de petite dimension (1, 2) peut se déplacer parallèlement auxdits rails de guidage (23) lorsqu'elle est insérée dans ledit support (10) ou lorsqu'elle en est déchargée selon ladite position de réception et de déchargement de cassette ; et dans lequel ledit support (10) comporte une plaque de support sensiblement horizontale (10a) depuis laquelle lesdits rails de guidage (23) se projettent vers le haut, cette plaque de support étant sensiblement positionnée au niveau de la partie inférieure dudit orifice (16) selon ladite position de réception et de déchargement de cassette dudit support (10) de telle sorte qu'une cassette de grande dimension ou de petite dimension (1, 2) qui se déplace en travers dudit orifice (16) puisse coulisser au niveau de sa surface inférieure respective (1a, 1b) sur ladite plaque de support (10a) tout en étant guidée latéralement par lesdits rails de guidage (23).

3.  Appareil selon la revendication 2, dans lequel chacune desdites cassettes de grande dimension et de petite dimension (1, 2) comporte une ouverture (O1, O2) pour accéder à la bande à l'intérieur des cassettes respectives (1, 2) lorsque ledit couvercle (3, 4) est ouvert et dans lequel ladite ouverture (O1, O2) est définie au moins en partie par un bord de ladite surface inférieure (1a, 1b) de la cassette (1, 2) qui doit être positionnée à l'avant lors de l'insertion de la cassette (1, 2) à l'intérieur dudit support (10) ; et dans lequel ladite plaque de support (10a) comporte un moyen de butée (27) dirigé vers le haut entre lesdits rails de guidage (23) depuis un bord arrière de ladite plaque de support (10a) en vue d'une coopération avec ledit bord de ladite cassette de grande dimension ou de petite dimension (1, 2) insérée à l'intérieur dudit support (10) pour positionner avec précision ladite ouverture (O1, O2) par rapport audit support (10) selon ladite position de chargement de cassette.

4.  Appareil selon la revendication 3, dans lequel ledit moyen de butée (27) comporte deux pattes dirigées vers le haut (27) qui s'étendent depuis ledit bord arrière adjacent auxdites surfaces se faisant face (25) desdits rails de guidage (23).

5.  Appareil selon la revendication 3, dans lequel lesdits rails de guidage (23) ont une longueur sensiblement inférieure à la dimension de ladite cassette de grande dimension mesurée parallèlement auxdites gorges (5) et lesdits rails de guidage (23) s'étendent vers l'avant depuis ledit bord arrière de ladite plaque de support (10a) ; et dans lequel lesdites gorges (5) de ladite cassette de grande dimension ont une longueur approximativement égale à ladite longueur desdits rails de guidage (23) et s'étendent depuis ledit bord de la surface inférieure (1a) afin de permettre l'insertion de ladite cassette de grande dimension (1) à l'intérieur dudit support (10) seulement avec ledit bord de sa surface inférieure (1a) positionné à l'avant.

6.  Cassette à bande de relativement grande dimension (1) présentant une largeur mesurée suivant une direction transversale supérieure à la largeur mesurée de manière similaire d'une cassette à bande standard de dimension relativement petite (2), ladite cassette de grande dimension (1) étant construite pour pouvoir être chargée de manière sélective en lieu et place de ladite cassette de petite dimension (2) dans un appareil d'enregistrement et/ou de reproduction à cassette tel que défini dans la revendication 1 ;

caractérisée en ce que :

ladite cassette de grande dimension (1) comprend un surface inferieure (1a) munie d'une pluralité de gorges (5) espacées suivant la direction transversale respective, chacune s'étendant à angle droit par rapport à ladite direction transversale, lesdites gorges (5) étant séparées d'une distance égale à ladite largeur de ladite cassette de petite dimension (2), et un couvercle (3) qui s'ouvre en s'éloignant de ladite surface inférieure (1a).

7.  Cassette (1) selon la revendication 6, comprenant en outre une ouverture (O1) pour accéder à la bande contenue dans la cassette (1) lorsque ledit couvercle (3) est ouvert, ladite ouverture (O1) étant définie au moins en partie par un bord (1b) de ladite surface inférieure (1a) depuis laquelle lesdites gorges (5) s'étendent, chacune desdites gorges (5) ayant une longueur sensiblement inférieure à la dimension de ladite cassette de grande dimension (1) mesurée depuis ledit bord (1b) suivant la direction parallèle auxdites gorges (5).

FIG.1

EP 0 286 751 B1

FIG.2

EP 0 286 751 B1

FIG.3

FIG.4

# FIG.5

EP 0 286 751 B1